# EUROPEAN PATENT APPLICATION

(11) **EP 3 182 260 A1**
(43) Date of publication of application: **21.06.2017**
(21) Application number: 15832409.5
(22) Date of filing: 03.08.2015
(51) Int. Cl.: G06F 3/048

(54) **CHARACTER EDITING METHOD AND DEVICE FOR SCREEN DISPLAY DEVICE**

(30) Priority: 13.08.2014 CN 201410397586
(71) Applicant: Alibaba Group Holding Limited, Grand Cayman (KY)
(72) Inventor: LI, Jianhui, Hangzhou Zhejiang 311121 (CN); HU, Chan, Hangzhou Zhejiang 311121 (CN); LI, Junpeng, Hangzhou Zhejiang 311121 (CN)
(74) Representative: Branderhorst, Matthijs Pieter Arie
(86) International application number: PCT/CN2015/085910
(87) International publication number: WO 2016/023424

(57) **Abstract**

Disclosed is a character editing method for a screen display device. The method comprises: displaying original character information in a character editing area of a screen display device; receiving selection of a to-be-modified character in the original character information; acquiring a candidate replacement character corresponding to the to-be-modified character from a confusable character database; displaying the candidate replacement character in a recommended area of the screen display device; receiving selection of the candidate replacement character; and replacing the to-be-modified character in the original character information by using the selected candidate replacement character. The present application also provides a character editing device for a screen display device. By using the method provided in the present application, the accuracy and the operation efficiency in a character editing process can be improved, and editing time of a user can be reduced; specifically used in editing operations after voice-to-character conversion of a mobile terminal, the method can further effectively improve the use experience of a user.

## Description

### Technical Field

The present application relates to character editing technologies, and in particular, to a character editing method for a screen display device. The present application also provides a character editing device for a screen display device.

### Background Art

A character input method refers to an encoding method for inputting various character symbols to a computer or another device (such as a mobile terminal). With the development of the computer and Internet technologies, users have increasingly higher requirements on the character input method. On the basis of the conventional keyboard input manner, various character input manners such as a handwriting input manner, an optical character recognition (OCR) input manner, and voice input emerge successively.

In the conventional keyboard input manner, numerals, letters, and symbols are input by tapping a keyboard, or Chinese characters are input according to a Pinyin rule, and these are common character input manners. When a rarely-used character or an unfamiliar character appears, the character may be input and recognized in the handwriting input manner according to strokes. In the OCR input, characters printed on paper are checked by using an electronic device (such as a scanner or a digital camera), shapes of the characters are determined via a dark/bright detection mode, and then the shapes are converted into characters by using a character recognition method. In the voice input method, voice of a speaker is converted into a sound signal which is compared with existing sound information stored in a device such as a computer, thus recognizing characters corresponding to the sound signal, and this input method is widely applied at present.

After obtaining original character information in the foregoing manner or in other manners such as by downloading from the Internet, a user often needs to edit the original character information due to various reasons, for example, for original character information converted from the voice input, due to technical reasons and reasons such as non-standard pronunciation or unclear enunciation of the user, the accuracy of the voice-to-character conversion function fails to reach 100%, and especially when affected by external interference such as noise, the character information obtained by conversion via the voice input method will have more errors.

In this case, the user usually may use the conventional input manner again to carry out further editing and modification, for example, using the keyboard input or handwriting input, the user needs to input phonetic letters or strokes one by one and select a character that meets the intention from multiple candidate options provided by the input method system. Moreover, in the handwriting input, it is possible that a recognition error occurs and thus strokes are input again. Therefore, the whole editing and modification process is relatively complex. Especially when the operation is carried out on a physical keyboard of a mobile terminal device such as a cell phone or on a virtual keyboard displayed by a touch screen, errors are more likely to occur in the editing and modification process due to a smaller key size, causing low character editing efficiency and affecting use experience of the user.

### Summary

The present application provides a character editing method for a screen display device, for solving the problems of complex steps, being error-prone, and low editing efficiency of the existing character editing method. The present application further provides a character editing device for a screen display device.

The present application provides a character editing method for a screen display device, including:
displaying original character information in a character editing area of a screen display device;
receiving selection of a to-be-modified character in the original character information;
acquiring a candidate replacement character corresponding to the to-be-modified character from a confusable character database;
displaying the candidate replacement character in a recommended area of the screen display device;
receiving selection of the candidate replacement character; and
replacing the to-be-modified character in the original character information with the selected candidate replacement character.

Optionally, the displaying original character information in a character editing area of a screen display device refers to displaying the original character information in a customized character editing area in which a size and an interval of characters are optimized for the convenience of click or touch.

Optionally, the original character information is acquired in the following manner: voice input, handwriting input, keyboard input, or optical character recognition (OCR) input.

Optionally, the confusable character database is acquired from a server and stored locally; and
correspondingly, the acquiring a candidate replacement character corresponding to the to-be-modified character from a confusable character database includes:
selecting a corresponding confusable character database according to an input manner of the original character information;
performing a query operation in the selected confusable character database, to acquire confusable characters corresponding to the to-be-modified character; and
screening the acquired confusable characters according to a context of the to-be-modified character in the original character information and an application scenario of the original character information, and using a screened-out confusable character as the candidate replacement character corresponding to the to-be-modified character.

Optionally, the confusable character database is stored on a server; and
correspondingly, the acquiring a candidate replacement character corresponding to the to-be-modified character from a confusable character database includes:
sending a candidate replacement character acquisition request to the server, the request at least including the to-be-modified character; and
receiving the candidate replacement character corresponding to the to-be-modified character returned by the server.

Optionally, after the candidate replacement character is displayed in the recommended area of the screen display device, if the selection of the candidate replacement character is not received, the method includes:
receiving a character, which is input in a manual input manner, as a manually input replacement character, the manual input manner including: voice input, keyboard input, or handwriting input;
replacing the to-be-modified character in the original character information with the manually input replacement character; and
updating the manually input replacement character to the confusable character database, to serve as a confusable character item corresponding to the to-be-modified character.

The present application further provides a character editing device for a screen display device, including:
an original character display unit, configured to display original character information in a character editing area of a screen display device;
a to-be-modified character receiving unit, configured to receive selection of a to-be-modified character in the original character information;
a candidate character acquisition unit, configured to acquire a candidate replacement character corresponding to the to-be-modified character from a confusable character database;
a candidate character display unit, configured to display the candidate replacement character in a recommended area of the screen display device;
a replacement character receiving unit, configured to receive selection of the candidate replacement character; and
an intelligent replacement execution unit, configured to replace the to-be-modified character in the original character information with the candidate replacement character received by the replacement character receiving unit.

Optionally, the original character display unit is specifically configured to display the original character information in a customized character editing area in which a size and an interval of characters are optimized for the convenience of click or touch.

Optionally, the original character information displayed by the original character display unit is acquired in the following manner: voice input, handwriting input, keyboard input, or optical character recognition (OCR) input.

Optionally, the confusable character database used by the candidate character acquisition unit is acquired from a server and stored locally; and
correspondingly, the candidate character acquisition unit includes:
a database selection sub-unit, configured to select a corresponding confusable character database according to an input manner of the original character information;
a confusable character query sub-unit, configured to perform a query operation in the selected confusable character database, to acquire confusable characters corresponding to the to-be-modified character; and
a confusable character screening sub-unit, configured to screen the acquired confusable characters according to a context of the to-be-modified character in the original character information and an application scenario of the original character information, and use a screened-out confusable character as the candidate replacement character corresponding to the to-be-modified character.

Optionally, the confusable character database used by the candidate character acquisition unit is stored on a server; and
correspondingly, the candidate character acquisition unit includes:
a request sending sub-unit, configured to send a candidate replacement character acquisition request to the server, the request at least including the to-be-modified character; and
a response receiving sub-unit, configured to receive the candidate replacement character corresponding to the to-be-modified character returned by the server.

Optionally, the device includes:
a manual input receiving unit, configured to: when the selection of the candidate replacement character is not received, receive a character, which is input in a manual input manner, as a manually input replacement character, the manual input manner including: voice input, keyboard input, or handwriting input;
a manual replacement execution unit, configured to replace the to-be-modified character in the original character information with the manually input replacement character; and
a database update unit, configured to update the manually input replacement character to the confusable character database, to serve as a confusable character item corresponding to the to-be-modified character.

Compared with the prior art, the present application has the following advantages:
The character editing method for a screen display device provided by the present application avoids the problems of complex operations and being error-prone of the conventional input manner by acquiring, from a confusable character database, a candidate replacement character corresponding to a to-be-modified character and replacing the to-be-modified character in the original character information. A user only needs to select a to-be-modified character and select a needed replacement character from the candidate replacement characters, and thus can complete an editing operation, which improves the accuracy and operation efficiency in the character editing process, and reduces editing time of the user. Specifically used in editing operations after voice-to-character conversion of a mobile terminal, the method can further effectively improve the use experience of the user.

### Brief Description of the Drawings

FIG. 1 is a first flow chart of an embodiment of a character editing method for a screen display device according to the present application;
FIG. 2 is a second flow chart of an embodiment of a character editing method for a screen display device according to the present application;
FIG. 3 is a schematic diagram of an effect of a customized character editing area according to an embodiment of the present application; and
FIG. 4 is a schematic diagram of an embodiment of a character editing device for a screen display device according to the present application.

### Detailed Description

Specific details are illustrated in the following descriptions to fully understand the present application. However, the present application can be implemented in multiple other modes different from the descriptions herein, and similar promotions may be made by those skilled in the art without departing from the spirit of the present application. Therefore, the present application is not subject to the concrete implementation as disclosed below.

In the present application, a character editing method for a screen display device and a character editing device for a screen display device are provided respectively, which are described in detail one by one in the following embodiments.

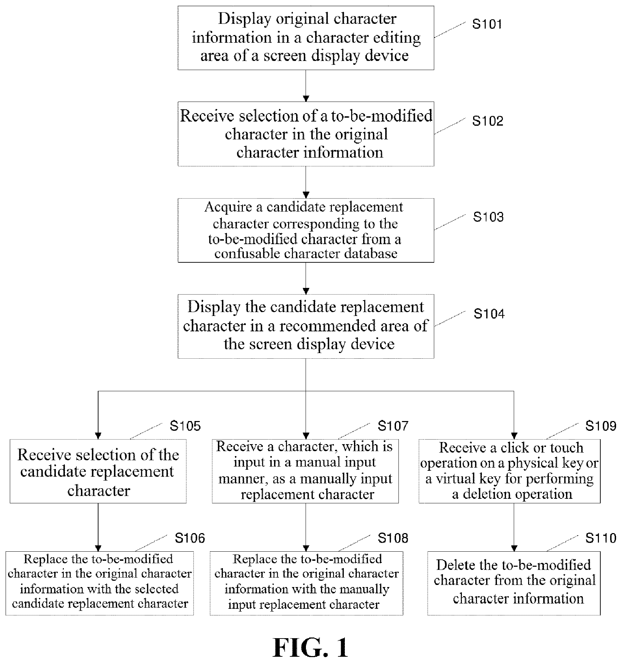

Refer to FIG. 1, which is a first flow chart of an embodiment of a character editing method for a screen display device according to the present application. The method includes the following steps:
Step S101: Display original character information in a character editing area of a screen display device.

In this technical solution of the embodiment of the present application, according to a to-be-modified character selected by a user from the original character information, candidate replacement characters (also referred to as recommended terms) corresponding to the to-be-modified character are displayed, and the to-be-modified character in the original character information is replaced with a candidate replacement character selected by the user, thus implementing a character editing method based on an intelligent recommendation manner, which can improve the accuracy and operation efficiency of the character editing process.

Because the accuracy of a voice-to-character conversion function is still insufficient and due to a limited size of a mobile terminal device, it is relatively inconvenient to edit in input manners such as keyboard input and handwriting input. Therefore, when the technical solution of this embodiment of the present application is applied to an editing operation after the voice-to-character conversion of the mobile terminal device, the beneficial effect is more obvious. However, the technical solution of this embodiment of the present application is not limited to the above application scenario, the technical solution of this embodiment of the present application can be generally used for editing original character information displayed on any screen display device, such as a personal computer, a smart phone, and an IPAD device.

The original character information in this embodiment of the present application may be generated in manners such as voice input, handwriting input, keyboard input, or optical character recognition (OCR) input, and may also be acquired in other manners, which are not specifically limited in the technical solution of this embodiment.

In order to edit the original character information, this step displays to-be-edited original character information in a character editing area of a screen display device. Considering the application scenario where the touch screen technology is used and the display screen size is relatively limited (for example, this technical solution is implemented on a smart phone), if the original character information is displayed in a character edit box provided by the system by default (for example, a character edit box in a commonly used SMS sending and receiving application program), it is inconvenient for a user to select the to-be-modified character by means of a touch operation on the touch screen. Therefore, this embodiment of the present application provides a preferred implementation, that is, displaying the original character information in a customized character editing area in which a size and an interval of characters are optimized for the convenience of click or touch.

In a specific example of this embodiment, the technical solution of this embodiment of the present application is implemented on a smart phone device. A default character edit box of the system is not used; instead, a visual area is customized according to the resolution of the display screen of the device. In specific implementation, a scrollview control may be employed, and then grids of a specific size are drawn in the visual area by using a UILabel control. The size of the grids is set according to a preset size and interval for displaying characters, and each Chinese character, letter, numeral, symbol or the like in the original character information is sequentially displayed in each grid.

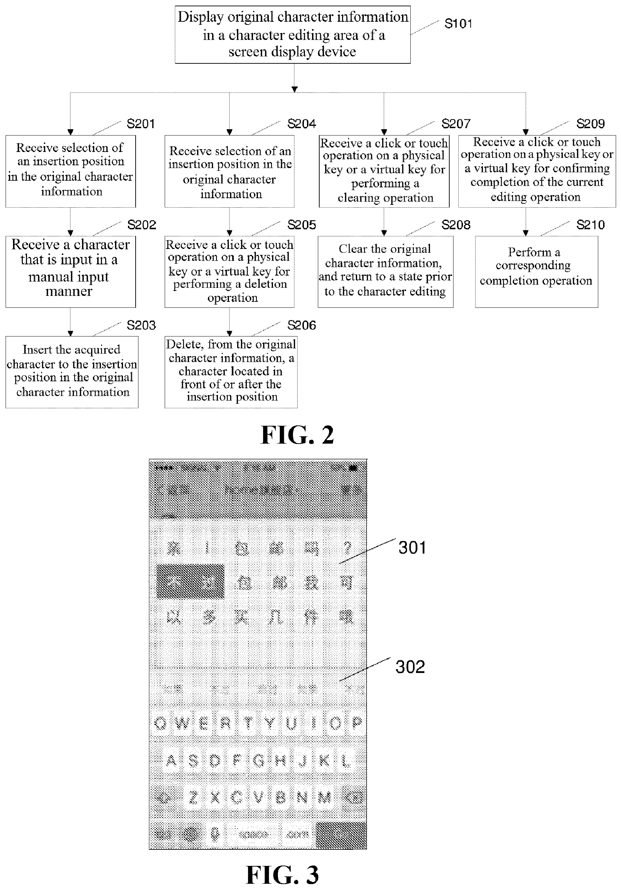

Refer to FIG. 3, which is a schematic diagram of an effect of a customized character editing area according to an embodiment of the present application, wherein 301 denotes the customized character editing area in this embodiment. It can be seen from the figure that by using the character editing area customized in the foregoing manner, this embodiment can display the original character information on the screen in a relatively clear manner, thus making it convenient for the user to select, by means of a touch operation on the touch screen, a character that needs to be modified or a cursor insertion position.

Step S102: Receive selection of a to-be-modified character in the original character information.

If the technical solution of this embodiment of the present application is implemented on a personal computer device, the to-be-modified character selected by the user may be acquired by receiving a keyboard or mouse operation of the user. If the technical solution of this embodiment of the present application is implemented on a mobile terminal device with a touch screen, such as a smart phone or an IPAD, the to-be-modified character selected by the user may be acquired by receiving a touch action of the user on the touch screen.

In the foregoing specific example of this embodiment, touch events of the user on the touch screen are defined into three types: click, long press, and slide; besides, a touch event of the user on the touch screen is captured by using a system API, and a corresponding operation is performed according to an event type and an event position. This step only involves the click operation and the slide operation, while the usage of the long press operation will be described in subsequent paragraphs.
1) Click event: It is determined, according to an event position parameter, whether the click operation occurs in a certain grid area of the character editing area; if yes, it indicates that a character displayed in the grid area is the to-be-modified character, and meanwhile, the grid area is highlighted.
2) Slide event: Three stages: start, sliding, and end are defined according to states of the slide event. A grid area corresponding to a start position is recorded at the start; in the sliding process, a selected grid area is added or modified according to the event position; and at the end of the sliding, a character included in the selected grid area is the to-be-modified character, and meanwhile, the selected grid area is highlighted.

Step S103: Acquire a candidate replacement character corresponding to the to-be-modified character from a confusable character database.

The confusable character database of the present application refers to a database obtained by collecting confusable characters and storing the confusable characters according to a designed data format after summarizing and classifying the confusable characters. One or more confusable characters corresponding to a specific character can be acquired by performing a query operation in the database with the specific character. According to different confusion causes during collection of the confusable characters, the confusable character database may be classified into different types, for example, a pronunciation confusable character database, which stores characters with identical or similar pronunciations; and a character-pattern confusable character database, which stores confusable characters with similar character patterns. In specific implementation, the confusable character database may be acquired from a server and stored locally, or may be merely stored on a server. The following describes how the candidate replacement character is acquired in the two implementations respectively.

### 1) The confusable character database is acquired from a server and stored locally.

First of all, a corresponding confusable character database is selected according to an input manner of the original character information. For example, if the original character information is a character that is input in a voice input manner or input with a keyboard in a Pinyin manner, a pronunciation confusable character database may be selected; if the original character information is obtained by means of optical character recognition (OCR) or in a handwriting input manner, a character-pattern confusable character database may be selected.

After the corresponding confusable character database is selected, the query operation can be performed according to the to-be-modified character, to acquire a confusable character corresponding to the to-be-modified character.

As a relatively simple implementation, the confusable character acquired through the query operation can be directly displayed on the display screen as the candidate replacement character. In order to improve the selection efficiency of the user, especially when a lot of confusable characters are acquired through the query operation, the confusable characters may further be screened. Specifically, according to a context of the to-be-modified character in the original character information, a confusable character with a relatively high matching rate in the same context or a similar context is selected. Meanwhile, an application scenario of the original character information may also be taken into consideration, for example, if the original character information is applied to a client APP of an e-commerce platform, a confusable character related to e-commerce transaction may be mainly selected, and the confusable character screened out through the foregoing process is used as the candidate replacement character corresponding to the to-be-modified character.

### 2) The confusable character database is stored on a server.

As the confusable character database is located on a server, in other words, all the operations described above such as selecting a database, query, and screening can be accomplished by the server. In this case, the client only needs to perform the following operations: sending a candidate replacement character acquisition request to the server, the request at least including the to-be-modified character; and receiving the candidate replacement character corresponding to the to-be-modified character returned by the server.

In specific implementation, if the server stores the original character information, for example, if the original character information is input to the client in a voice input manner and is converted by the server into the original character information and returned to the client, in this case, the server already stores the original character information. Therefore, the client may only carry the to-be-modified character in the request. If the server does not store the original character information, the client may further carry, in the request, the original character information and an acquisition manner of the original character information, thus making it convenient for the server to perform related processing operations.

Step S104: Display the candidate replacement character in a recommended area of the screen display device.

The acquired candidate replacement characters are displayed in the recommended area of the screen display device, so that the user conveniently selects a needed replacement character from the candidate replacement characters. Referring to FIG. 3, area 302 therein is a recommended area in a specific example of this embodiment. For the to-be-modified character selected by the user in the character editing area, corresponding candidate replacement characters are displayed in the recommended area. The above figure is merely schematic, and in specific implementation, both the position and size of the recommended area may be set according to specific situations.

Step S105: Receive selection of the candidate replacement character.

This step is similar to step S102. By monitoring a mouse click operation or a touch operation of the user on the touch screen, it may be determined, according to position information of the click or touch operation, whether the operation is a click or touch operation on a certain candidate replacement character in the recommended area, and if yes, the candidate replacement character is the replacement character selected by the user.

Step S106: Replace the to-be-modified character in the original character information with the selected candidate replacement character.

The to-be-modified character in the original character information is replaced with the candidate replacement character selected in step S105, and meanwhile, the original character information on which the replacement operation has been performed should further be displayed in the character editing area. In the specific example of this embodiment, if the candidate replacement characters selected in step S105 and the to-be-modified character have the same number of characters, the candidate replacement character can be displayed, one character after another, in the grid area where the to-be-modified character is located. If the candidate replacement character and the to-be-modified character have different numbers of characters, display of partial original character information located after the to-be-modified character in the character editing area further needs to be adjusted.

The process of replacement editing of the to-be-modified character in an intelligent recommendation manner is described above. The foregoing processing procedure is referred to as an intelligent recommendation manner because the implementation of this procedure does not require the user to manually input the required replacement character; instead, candidate replacement characters corresponding to the to-be-modified character are automatically acquired by the method provided in this embodiment, and are displayed on the interface and recommended to the user, so that the user only needs to select from the candidate replacement characters to accomplish the replacement operation.

In the specific implementation, there may exist such two cases as follows: no candidate replacement character corresponding to the to-be-modified character is found in the confusable character database, or none of the candidate replacement characters displayed in the recommended area meets the requirement of the user. In the foregoing two cases, generally the selection of the candidate replacement character would not be received, and therefore, execution of step S105 and step S106 would not be triggered. The technical solution of this embodiment provides another input manner, so that the user inputs the required replacement character. The process includes step 8107-step S108, and the two steps are described below.

Step S107: Receive a character, which is input in a manual input manner, as a manually input replacement character.

A port for manual input is provided on a display interface of the screen display device for the user, and a corresponding input character is received according to selection of the user. The manual input manner includes: voice input, keyboard input, handwriting input, or the like.

For example, a button for performing a voice input operation is displayed on the interface, and if a click or touch operation on the button is received, reception of the voice input information of the user is started. Upon detection that a pause time of the voice input exceeds a preset threshold or upon detection that a click or touch operation on the button for voice input is stopped, the voice input process is terminated, and the input voice information is converted into characters, thus obtaining the manually input replacement character of this step.

In specific implementation, an audio recording process may be implemented by invoking a related function or interface provided by an AVAudioRecorder type, and then a generated AMR audio file is sent, by means of the HTTP protocol or in other manners, to the server for processing, wherein the server is responsible for voice-to-character conversion. The server converts the voice into characters via technologies such as noise filtering, feature extraction, and model matching, and returns the characters to the client. The voice-to-character technology is more mature, for example, Android provides an open source implementation of Speech To Text, and persons skilled in the art may refer to the implementation.

In addition to the above voice input manner, the manual replacement character may also be acquired in a keyboard input manner. For example, for a personal computer, the replacement character input by the user can be acquired by monitoring and receiving a keyboard input. For a mobile terminal such as a smart phone, a button for performing a keyboard input operation may be displayed on the interface, and if a click or touch operation on the button is received, a system default virtual keyboard is called out for the user to input characters. Certainly, while the candidate replacement character is displayed in the recommended area, the system default virtual keyboard may also be automatically called out to be used by the user. In specific implementation, an interface provided by the system may be invoked to implement invoking of the virtual keyboard, for example, on the ios platform, a function becomefirstresponder() may be invoked to call out the virtual keyboard.

The above examples are all schematic, and in specific implementation, a corresponding manual input interface may be provided on the display interface as needed, and the manual input manner can be invoked in different trigger modes, as long as the character input by the user in the manual input manner (that is, the manually input replacement character) can be acquired.

Step S108: Replace the to-be-modified character in the original character information with the manually input replacement character.

The manually input replacement character is acquired in step S107, and in this step, the to-be-modified character in the original character information is replaced with this character, and the original character information displayed in the character editing area is updated in a manner similar to that of step S106.

Through the processing of the steps S107-S108, when no candidate replacement character is selected, the to-be-modified character is replaced with a character acquired in another manner. The user does not select from the candidate replacement characters (or no candidate replacement character is displayed in the recommended area), indicating that in the confusable character database, confusable characters corresponding to the to-be-modified character are not complete enough. In order to enrich and perfect data in the confusable character database so as to provide candidate replacement characters for the user more effectively, this embodiment provides a self-learning function of the confusable character database, that is, the manually input replacement character is updated to the confusable character database, to serve as a confusable character item corresponding to the to-be-modified character.

If the confusable character database is stored on a server, the to-be-modified character and the corresponding manually input replacement character may be sent to the server by means of the HTTP protocol or in other manners, and the server may use its own strategy to determine whether it is necessary to update related data and perform corresponding processing.

If the confusable character database is acquired from a server and stored locally, the data update operation may be directly performed on the local database, to add the manually input replacement character as a confusable character item of the to-be-modified character to the local database.

Besides, if the confusable character database is stored locally, the updated database data may further be uploaded to the server, to be summarized and/or shared by the server. In specific implementation, timing and a data volume for data uploading may be set using different strategies, for example, data is uploaded in real time or periodically, and all data of the local confusable character database or only incremented data in the latest update may be selected to be uploaded each time. The server may summarize the received data according to its own strategy, and may share the summarized database, for clients to download and use. By using the above manner, the self-learning outcomes of the clients in the system are summarized and shared, thus being conducive to improving the effectiveness of the intelligent recommendation in the entire system.

The above steps describe the replacement operation for the to-be-modified character, and the technical solution of this embodiment can further support a deletion operation for the to-be-modified character. The processing procedure includes steps S109-S110, and the two steps are described below.

Step S109: Receive a click or touch operation on a physical key or a virtual key for performing a deletion operation.

The physical key in this step refers to a key on a physical keyboard, for example, a key on a personal computer keyboard, a key, a menu key, an enter key, or the like on a physical keyboard provided under a display screen of a mobile terminal device, and a side key of a mobile terminal device; the virtual key in this step generally refers to a key on a virtual keyboard and a virtual button that are displayed on a display screen.

In different application scenarios, the click or touch operation on the key may trigger execution of different functions. In this step, by monitoring the user's click operation and the touch operation on the touch screen, it is determined whether a physical key or virtual key for performing a deletion operation is clicked or touched, and if yes, the subsequent step S110 is performed.

Step S110: Delete the to-be-modified character from the original character information.

After the to-be-modified character is deleted from the original character information, correspondingly, the original character information on which the deletion operation has been performed is updated and displayed in the character editing area.

A complete character editing method may have the functions of replacing and deleting the selected character as described in the steps S101-S110, and may also have four functions as follows: inserting a character according to an insertion position selected by the user, deleting a character, clearing all the original character information, and confirming completion of the current editing. Because the four functions are common functions of a character editing method, the implementation of the functions are briefly described below with reference to FIG. 2.

After step S101 of displaying the original character information in the character editing area of the screen display device is performed, a processing procedure of character insertion based on a selected insertion position includes the following step S201-step S203.

Step S201: Receive selection of an insertion position in the original character information.

An operation manner representing the selection of the insertion position may be preset, and upon detection of the operation manner in the character editing area, the user's selection of the insertion position is received.

In a specific example of this embodiment, touch events of the user on the touch screen are defined into three types: click, long press, and slide; besides, a touch event of the user on the touch screen is captured by using a system API, wherein, for the processing of the click event and the slide event, please refer to the description in step S102. In this step, it is preset that the long press event represents the user's selection of the insertion position, and therefore, it is determined, according to a position parameter of the detected long press event, whether the user performs a long press operation in a certain grid area, and if yes, it indicates that the character insertion position is located between a character corresponding to this grid area and a character corresponding to the next grid area, and a highlighted flickering vertical bar is drawn on the right edge of this grid area, to prompt the user of the currently selected insertion position.

Step S202: Receive a character that is input in a manual input manner.

A port for manual input is provided on a display interface of the screen display device for the user, and a corresponding input character is received according to the selection of the user. This step is similar to step S107. For detailed description information, refer to related parts of step S107.

Step S203: Insert the character acquired in the foregoing step to the insertion position in the original character information.

The character acquired in step S202 is inserted to the corresponding insertion position in the original character information, and correspondingly, the original character information on which the insertion operation has been performed is updated and displayed in the character editing area.

After step S101 of displaying the original character information in the character editing area of the screen display device is performed, a character deletion process based on a selected insertion position includes step S204-step S206:
Step S204: Receive selection of an insertion position in the original character information.
   This step is basically the same as step S201. Please refer to related description in step S201.
Step S205: Receive a click or touch operation on a physical key or a virtual key for performing a deletion operation.
   For the description of the physical key and the virtual key, please refer to the related parts in step S109.
   In this step, by monitoring the user's click operation and the touch operation on the touch screen, it is determined whether a physical key or virtual key for performing a deletion operation is clicked or touched, and if yes, the subsequent step S206 is performed.
Step S206: Delete, from the original character information, a character located in front of or after the insertion position.
   In a specific implementation process, multiple physical keys or virtual keys for performing the deletion operation may be preset, and different operation manners are defined for different keys. For example, the delete key on a conventional virtual keyboard generally deletes a character located in front of the insertion position, while the delete key on a physical keyboard generally deletes a character located after the insertion position. In this step, a character located in front of or after the insertion position is deleted from the original character information according to the received different operation manners corresponding to a physical key or virtual key.
   Similar to the previous editing operation, after the deletion operation is performed, the original character information on which the deletion operation has been performed is updated and displayed in the character editing area.
   After step S101 of displaying the original character information in the character editing area of the screen display device is performed, a processing procedure of clearing all the original character information includes the following step S207-step S208.
Step S207: Receive a click or touch operation on a physical key or a virtual key for performing a clearing operation.
   For the description of the physical key and the virtual key, please refer to the related parts in step S109.
   In this step, by monitoring the user's click operation and the touch operation on the touch screen, it is determined whether a physical key or virtual key for performing a clearing operation is clicked or touched, and if yes, the subsequent step S208 is performed.
Step S208: Clear the original character information, and return to a state prior to the character editing.
   The clearing operation of this step refers to deleting all original character information, and correspondingly, the original character information displayed in the character editing area will also be cleared, to return to the state prior to the character editing.
   After step S101 of displaying the original character information in the character editing area of the screen display device is performed, a processing procedure of confirming completion of the current editing includes step S209-step S210.
Step S209: Receive a click or touch operation on a physical key or a virtual key for confirming completion of the current editing.
   For the description of the physical key and the virtual key, please refer to the related parts in step S109.
   In this step, by monitoring the user's click operation and the touch operation on the touch screen, it is determined whether a physical key or virtual key for confirming completion of the current editing operation is clicked or touched, and if yes, the subsequent step S210 is performed.
Step S210: Perform a corresponding completion operation, the completion operation including: a saving operation or a sending operation.

The corresponding completion operation is performed according to the click or touch operation received in step S209. According to different application scenarios of the character editing method provided in the present application, the completion operation performed in this step may be different, for example, in a conventional character editing application, the edited original character information is generally saved, while in some instant messaging applications, the edited original character information may be directly sent. In specific implementation, other operations, which represent the completion of the current editing, different from the above operations may also be performed in this step.

The processing procedure of the character editing method for a screen display device provided in the technical solution of this embodiment is described above. It should be noted that steps S101-S106 are the core of this technical solution, and the editing operation of replacing a to-be-modified character according to an intelligently recommended term can be implemented through these steps. Other steps provide different character input manners or other editing operation manners for a user, but are not necessary steps for implementing this technical solution, and may be selected or adjusted as needed during specific implementation.

The character editing method for a screen display device provided by the present application avoids the problems of complex operations and being error-prone of the conventional manual input manner by replacing the to-be-modified character in the original character information with a candidate replacement character corresponding to the to-be-modified character, wherein the candidate replacement character is acquired from a confusable character database. A user only needs to select a to-be-modified character and select a needed replacement character from the candidate replacement characters, and thus can complete an editing operation, which improves the accuracy and operation efficiency in the character editing process, and reduces editing time of the user. Specifically used in editing operations after voice-to-character conversion of a mobile terminal, the method can further effectively improve the use experience of the user.

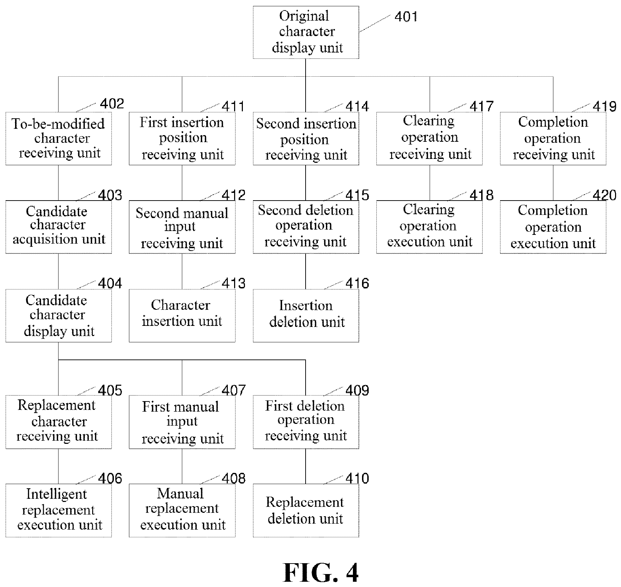

The foregoing embodiment provides a character editing method for a screen display device, and correspondingly, the present invention further provides a character editing device for a screen display device. Refer to FIG. 4, which is a schematic diagram of an embodiment of a character editing device for a screen display device according to the present application. The device embodiment is basically similar to the method embodiment, and therefore is described simpler. For related parts, refer to the description in the method embodiment. The device embodiment described below is merely schematic.

A character editing device for a screen display device of this embodiment includes: an original character display unit 401, configured to display original character information in a character editing area of a screen display device; a to-be-modified character receiving unit 402, configured to receive selection of a to-be-modified character in the original character information; a candidate character acquisition unit 403, configured to acquire a candidate replacement character corresponding to the to-be-modified character from a confusable character database; a candidate character display unit 404, configured to display the candidate replacement character in a recommended area of the screen display device; a replacement character receiving unit 405, configured to receive selection of the candidate replacement character; and an intelligent replacement execution unit 406, configured to replace the to-be-modified character in the original character information with the candidate replacement character received by the replacement character receiving unit.

The device further includes: a first manual input receiving unit 407, configured to: when the selection of the candidate replacement character is not received, receive a character, which is input in a manual input manner, as a manually input replacement character; and a manual replacement execution unit 408, configured to replace the to-be-modified character in the original character information with the manually input replacement character.

The device further includes: a first deletion operation receiving unit 409, configured to: after the candidate replacement character is displayed in the recommended area of the screen display device, receive a click or touch operation on a physical key or a virtual key for performing a deletion operation; and a replacement deletion unit 410, configured to delete the to-be-modified character from the original character information.

The device further includes: a first insertion position receiving unit 411, configured to: after the original character information is displayed in the character editing area of the screen display device, receive selection of an insertion position in the original character information; a second manual input receiving unit 412, configured to receive a character that is input in a manual input manner; and a character insertion unit 413, configured to insert the character acquired in the foregoing step to the insertion position in the original character information.

The device further includes: a second insertion position receiving unit 414, configured to: after the original character information is displayed in the character editing area of the screen display device, receive selection of an insertion position in the original character information; a second deletion operation receiving unit 415, configured to receive a click or touch operation on a physical key or a virtual key for performing a deletion operation; and an insertion deletion unit 416, configured to delete, from the original character information, a character located in front of or after the insertion position.

The device further includes: a clearing operation receiving unit 417, configured to: after the original character information is displayed in the character editing area of the screen display device, receive a click or touch operation on a physical key or a virtual key for performing a clearing operation; and a clearing operation execution unit 418, configured to clear the original character information, and return to a state prior to the character editing.

The device further includes: a completion operation receiving unit 419, configured to: after the original character information is displayed in the character editing area of the screen display device, receive a click or touch operation on a physical key or a virtual key for confirming completion of the current editing; and a completion operation execution unit 420, configured to perform a corresponding completion operation, the completion operation including: a saving operation or a sending operation.

Optionally, the original character display unit is specifically configured to display the original character information in a customized character editing area in which a size and an interval of characters are optimized for the convenience of click or touch.

Optionally, the original character information displayed by the original character display unit is acquired in the following manner: voice input, handwriting input, keyboard input, or optical character recognition (OCR) input.

Optionally, the confusable character database used by the candidate character acquisition unit is acquired from a server and stored locally; and
correspondingly, the candidate character acquisition unit includes:
a database selection sub-unit, configured to select a corresponding confusable character database according to an input manner of the original character information;
a confusable character query sub-unit, configured to perform a query operation in the selected confusable character database, to acquire confusable characters corresponding to the to-be-modified character; and
a confusable character screening sub-unit, configured to screen the acquired confusable characters according to a context of the to-be-modified character in the original character information and an application scenario of the original character information, and use a screened-out confusable character as the candidate replacement character corresponding to the to-be-modified character.

Optionally, the confusable character database used by the candidate character acquisition unit is stored on a server; and
correspondingly, the candidate character acquisition unit includes:
a request sending sub-unit, configured to send a candidate replacement character acquisition request to the server, the request at least including the to-be-modified character; and
a response receiving sub-unit, configured to receive the candidate replacement character corresponding to the to-be-modified character returned by the server.

Optionally, the device includes:
a database update unit, configured to update the manually input replacement character to the confusable character database, to serve as a confusable character item corresponding to the to-be-modified character.

Optionally, when the confusable character database used by the candidate character acquisition unit is stored locally, the device further includes:
a data uploading unit, configured to upload data in the updated confusable character database to the server, to be summarized and/or shared by the server.

Although the preferred embodiments of the present application are disclosed above, they are not used to limit the present application. Those skilled in the art can make possible changes and modifications without departing from the spirit and scope of the present application. Therefore, the protection scope of the present application shall be subject to the scope defined by the claims of the present application.

In a typical configuration, the computer device includes one or more processors (CPUs), I/O interfaces, network interfaces, and a memory.

The memory may include computer readable media such as a volatile memory, a Random Access Memory (RAM), and/or a non-volatile memory, e.g., a Read-Only Memory (ROM) or a flash RAM, and so on. The memory is an example of a computer readable medium.
1. Computer readable media include permanent, nonpermanent, mobile and immobile media, which can implement information storage through any method or technologies. The information may be computer readable instructions, data structures, program modules or other data. Examples of storage media of a computer include, but not limited to, Phase-change RAMs (PRAMs), Static RAMs (SRAMs), Dynamic RAMs (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices or any other non-transmission media, which can be used for storing information which can be accessed by the computer device. According to the definitions herein, the computer readable media exclude non-transitory computer readable medium (transitory media), such as modulated data signals and carriers.
2. Persons skilled in the art should understand that, the embodiments of the present application may be provided as a method, a system, or a computer program product. Therefore, the present application may be implemented as a completely hardware embodiment, a completely software embodiment, or an embodiment combing software and hardware. Moreover, the present application may be a computer program product implemented on one or more computer usable storage media (including, but not limited to, a magnetic disk memory, a CD-ROM, an optical memory, and the like) including computer usable program code.

## Claims

1. A character editing method for a screen display device, comprising:
displaying original character information in a character editing area of a screen display device;
receiving selection of a to-be-modified character in the original character information;
acquiring a candidate replacement character corresponding to the to-be-modified character from a confusable character database;
displaying the candidate replacement character in a recommended area of the screen display device;
receiving selection of the candidate replacement character; and
replacing the to-be-modified character in the original character information with the selected candidate replacement character.

2. The character editing method for a screen display device according to claim 1, wherein the displaying original character information in a character editing area of a screen display device refers to displaying the original character information in a customized character editing area in which a size and an interval of characters are optimized for the convenience of click or touch.

3. The character editing method for a screen display device according to claim 1, wherein the original character information is acquired in the following manner: voice input, handwriting input, keyboard input, or optical character recognition (OCR) input.

4. The character editing method for a screen display device according to claim 1, wherein the confusable character database is acquired from a server and stored locally; and
correspondingly, the acquiring a candidate replacement character corresponding to the to-be-modified character from a confusable character database comprises:
selecting a corresponding confusable character database according to an input manner of the original character information;
performing a query operation in the selected confusable character database, to acquire confusable characters corresponding to the to-be-modified character; and
screening the acquired confusable characters according to a context of the to-be-modified character in the original character information and an application scenario of the original character information, and using a screened-out confusable character as the candidate replacement character corresponding to the to-be-modified character.

5. The character editing method for a screen display device according to claim 1, wherein the confusable character database is stored on a server; and
correspondingly, the acquiring a candidate replacement character corresponding to the to-be-modified character from a confusable character database comprises:
sending a candidate replacement character acquisition request to the server, the request at least comprising the to-be-modified character; and
receiving the candidate replacement character corresponding to the to-be-modified character returned by the server.

6. The character editing method for a screen display device according to claim 4 or 5, wherein after the candidate replacement character is displayed in the recommended area of the screen display device, if the selection of the candidate replacement character is not received, the method comprises:
receiving a character, which is input in a manual input manner, as a manually input replacement character, the manual input manner comprising: voice input, keyboard input, or handwriting input;
replacing the to-be-modified character in the original character information with the manually input replacement character; and
updating the manually input replacement character to the confusable character database, to serve as a confusable character item corresponding to the to-be-modified character.

7. A character editing device for a screen display device, comprising:
an original character display unit, configured to display original character information in a character editing area of a screen display device;
a to-be-modified character receiving unit, configured to receive selection of a to-be-modified character in the original character information;
a candidate character acquisition unit, configured to acquire a candidate replacement character corresponding to the to-be-modified character from a confusable character database;
a candidate character display unit, configured to display the candidate replacement character in a recommended area of the screen display device;
a replacement character receiving unit, configured to receive selection of the candidate replacement character; and
an intelligent replacement execution unit, configured to replace the to-be-modified character in the original character information with the candidate replacement character received by the replacement character receiving unit.

8. The character editing device for a screen display device according to claim 7, wherein the original character display unit is specifically configured to display the original character information in a customized character editing area in which a size and an interval of characters are optimized for the convenience of click or touch.

9. The character editing device for a screen display device according to claim 7, wherein the original character information displayed by the original character display unit is acquired in the following manner: voice input, handwriting input, keyboard input, or optical character recognition (OCR) input.

10. The character editing device for a screen display device according to claim 7, wherein the confusable character database used by the candidate character acquisition unit is acquired from a server and stored locally; and
correspondingly, the candidate character acquisition unit comprises:
a database selection sub-unit, configured to select a corresponding confusable character database according to an input manner of the original character information;
a confusable character query sub-unit, configured to perform a query operation in the selected confusable character database, to acquire confusable characters corresponding to the to-be-modified character; and
a confusable character screening sub-unit, configured to screen the acquired confusable characters according to a context of the to-be-modified character in the original character information and an application scenario of the original character information, and use a screened-out confusable character as the candidate replacement character corresponding to the to-be-modified character.

11. The character editing device for a screen display device according to claim 7, wherein the confusable character database used by the candidate character acquisition unit is stored on a server; and
correspondingly, the candidate character acquisition unit comprises:
a request sending sub-unit, configured to send a candidate replacement character acquisition request to the server, the request at least comprising the to-be-modified character; and
a response receiving sub-unit, configured to receive the candidate replacement character corresponding to the to-be-modified character returned by the server.

12. The character editing device for a screen display device according to claim 10 or 11, wherein the device comprises:
a manual input receiving unit, configured to: when the selection of the candidate replacement character is not received, receive a character, which is input in a manual input manner, as a manually input replacement character, the manual input manner comprising: voice input, keyboard input, or handwriting input;
a manual replacement execution unit, configured to replace the to-be-modified character in the original character information with the manually input replacement character; and
a database update unit, configured to update the manually input replacement character to the confusable character database, to serve as a confusable character item corresponding to the to-be-modified character.
